# EUROPÄISCHE PATENTSCHRIFT

(11) **EP 1 038 991 B1**
(45) Veröffentlichungstag und Bekanntmachung des Hinweises auf die Patenterteilung: **07.04.2004**
(21) Anmeldenummer: 00103623.5
(22) Anmeldetag: 21.02.2000
(51) Int. Cl.: C23G 1/36

(54) **Verfahren zur Rückgewinnung von Säuren aus metallhaltigen Lösungen dieser Säuren**
Process recovering acids from metalliferous solutions of these acids
Procédé de récupération d' acides à partir de solutions métallifères de ces acides

(30) Priorität: 22.03.1999 AT 50699
(43) Veröffentlichungstag der Anmeldung: 27.09.2000
(73) Patentinhaber: Andritz AG, 8045 Graz (AT)
(72) Erfinder: Lebl, Albert, Dipl.-Ing. Dr., 1170 Wien (AT)
(74) Vertreter: Schweinzer, Friedrich

(56) Entgegenhaltungen:
- EP-A- 0 843 025
- WO-A-96/27554
- US-A- 4 663 145
- US-A- 5 149 515
- PATENT ABSTRACTS OF JAPAN vol. 1995, no. 07, 31. August 1995 (1995-08-31) & JP 07 097695 A (SUMITOMO METAL IND LTD), 11. April 1995 (1995-04-11)
- PATENT ABSTRACTS OF JAPAN vol. 1997, no. 09, 30. September 1997 (1997-09-30) & JP 09 126443 A (NKK CORP), 16. Mai 1997 (1997-05-16)

## Beschreibung

Die Erfindung betrifft ein Verfahren zur Rückgewinnung von Säuren aus metallhaltigen Lösungen von Säuren, die HNO₃, sowie vorzugsweise HF, Fe, Cr, Ni-Verbindungen oder Mischungen aus diesen Verbindungen enthalten, durch Verdampfung und pyrolytische Aufspaltung in Säuren und Metalloxide.

Zur Rückgewinnung von Säuren werden wässerige Lösungen von Metallverbindungen mit Düsen in feinen Tropfen in einen beheizten Reaktor gesprüht. Durch Wärmeeinwirkung verdampft zuerst die Flüssigkeit (Verdampfungsphase) und anschließend beginnt die Metallverbindung sich zu zersetzen (Oxidationsphase). Die Tropfen fallen im freien Fall zum Reaktorunterteil und müssen innerhalb weniger Sekunden fertig abgeröstet sein, d.h. pyrolytisch in ein Oxid und einen Säureanteil getrennt werden, bevor die Säuredämpfe am Reaktorkopf und das Oxid im Reaktorboden entfernt werden können. Wegen dieser kurzen Verweilzeit ist immer ein gewisser Restsäureanteil an das Metall, z.B. Eisen, gebunden, der nicht mehr ausreichend entfernt werden kann und als störende Verunreinigung (Säurereste) im Oxid verbleibt. Die Reaktortemperatur muß daher so hoch gewählt werden, daß auch größere Tropfen, oder Tropfen im Sprühkegel Zentrum noch weitgehend abgeröstet werden können. Dieser Umwandlungsvorgang erfolgt zeitlich verzögert vom äußeren Sprühkegelrand ausgehend nach innen fortschreitend. Dadurch kommt es zur Überhitzung und zur Qualitätsverschlechterung des Oxides (spezifische Oberfläche wird kleiner). Auch besteht die Gefahr immer mehr oder weniger Säuredämpfe mit dem Oxid auszutragen.

Derartige Verfahren sind z. B aus der AT 395312 bekannt. Nachteilig ist besonders, daß die Verdampfung und Zersetzung in einem Schritt bei hohen Temperaturen stattfindet, wodurch erhebliche Säurezersetzungen auftreten. Bei Salpetersäure (HNO₃) entstehen auch schädliche Stickstoffoxide (NO, NO₂). Zur Kompensation muß stark gekühlt und gegebenenfalls auch Oxidationsmittel zugesetzt werden. Auch für die HCl-Zersetzung sind analoge Verfahren z.B. aus der AT 264 248 bekannt. Hier wird die zu regenerierende Säure im Gegenstrom durch das Abgas verdampft und anschließend im Reaktor zersetzt.

Ziel der Erfindung ist es die HNO₃- Zersetzung zu reduzieren und dadurch die NOₓ-Rückgewinnung einzusparen.

Die Erfindung ist daher dadurch gekennzeichnet, daß ein beheizter, durch Einbauten in zwei Zonen unterteilter Reaktor vorgesehen ist, wobei in der oberen, ersten Zone eine Verdampfung Verdampfung bei einer Temperatur von 110°C - 350 °C und in einer weiteren, direkt anschließenden Zone eine Zersetzung bei einer Temperatur von 450 °C - 900 °C stattfindet. Durch die niedrigen Temperaturen in der Verdampfungszone werden vorwiegend die freien Säuren verdampft und die NOₓ-Bildung weitestgehend reduziert. Die hohe Temperatur in der Zersetzungszone ermöglicht die Produktion von sehr reinen Metalloxiden.

Eine günstige Weiterbildung der Erfindung ist dadurch gekennzeichnet, daß die Temperatur in der Verdampfungszone 150 °C - 200 °C, beträgt. Bei diesen Temperaturen kann die Zersetzung der HNO₃ weitestgehend vermieden werden.

Eine vorteilhafte Ausgestaltung der Erfindung ist dadurch gekennzeichnet, daß die Temperatur in der Zersetzungszone 550 °C - 700°C, beträgt. Bei diesen Temperaturen wird auch ein allfälliger Säurerest aus dem Oxid ausgetrieben und somit ein sehr reines Metalloxid erzeugt.

Eine vorteilhafte Weiterbildung der Erfindung ist dadurch gekennzeichnet, daß nach der Zersetzung eine Absorption erfolgt, wobei die Temperatur der Absorption 70 °C - 90 °C, vorzugsweise 78 °C - 85 °C, betragen kann.

Eine günstige Ausgestaltung der Erfindung ist dadurch gekennzeichnet, daß die Absorption adiabatisch erfolgt. Dadurch kann ein sonst erforderlicher Wärmetauscher entfallen.

Eine günstige Weiterbildung der Erfindung ist dadurch gekennzeichnet, daß das Abwasser aus der Gaswäsche der Absorptionskolonne zugeführt wird. Dies führt zu einer abwasserfreien Anlage.

Eine vorteilhafte Weiterbildung der Erfindung ist dadurch gekennzeichnet, daß Waschwasser aus der Beize der Absorptionskolonne zugeführt wird. Damit können auch die Waschwässer der Beize vorteilhaft "entsorgt" werden.

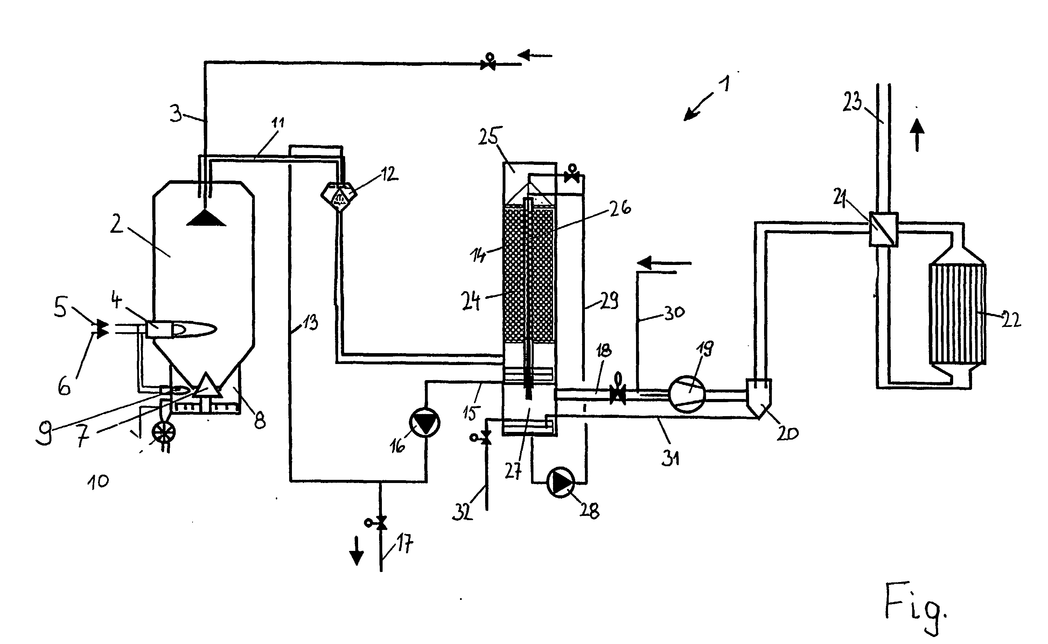

Die Erfindung wird nun anhand der Zeichnung beispielhaft beschrieben, wobei die Fig. eine Anlage zur Durchführung des erfindungsgemäßen Verfahrens darstellt.

Die Regenerationsanlage 1 besteht aus einem Reaktor mit einem Verdampfungsteil 2 und einem Zersetzungsteil 8. In den Verdampfungsteil wird über eine Leitung 3 Abbeize, insbesondere aus einer Mischsäurebeizanlage, eingedüst. Mittels eines Brenners 4, dem Heizmedium, z.B. Gas 5 und Verbrennungsluft 6 zugeführt werden, wird die Abbeize auf ca. 110 °C bis 350 °C, vorteilhaft 150 °C bis 200 °C, erhitzt, so daß im wesentlichen nur eine Verdampfung der Säure und keine Zersetzung erfolgt. Dies ist speziell für die Salpetersäure (HNO₃) wichtig, bei deren Zersetzung sonst beispielsweise 30 - 50% zu Stickoxiden umgewandelt werden. An den Verdampfungsteil 2, der hier als Sprühröstreaktor ausgebildet ist, schließt sich, durch eine Verengung 7 davon abgedichtet, eine weitere Zone 8 direkt an, in der die Metallverbindungen thermisch zersetzt und das Metalloxid erzeugt wird. Die Verengung 7 kann z.B. als Kegelbrecher ausgebildet sein, um Agglomerationen von Teilchen zu brechen. Weiters wird dadurch eine bessere, gleichmäßigere Oxidation (Rösten) der Metallverbindungen erreicht. Zur Erzeugung der erforderlichen Temperatur von 450 °C bis 900 °C, vorteilhaft zwischen 550 °C und 700 °C, ist ein Brenner 9 vorgesehen. Das Oxid wird dann durch eine Schleuse 10 ausgetragen, gekühlt und entsorgt bzw. weiter behandelt.

Die Abgase, bestehend im wesentlichen aus Säuredämpfen und Wasser, werden über eine Abgasleitung 11 einem Strahlwäscher oder Venturiwäscher 12 zugeführt. Diesem Wäscher 12 wird über eine Leitung 13 Regenerat aus der Absorptionskolonne 14 zugeführt und damit die Abgase gekühlt und bereits teilweise ausgewaschen. In der adiabatischen Absorptionskolonne 14 erfolgt größtenteils die Absorption der verbleibenden Säure. Aus dieser Absorptionskolonne 14 wird dann über Leitung 15 das Regenerat abgezogen, mittels Pumpe 16 gefördert und ein Teilstrom über Leitung 13 dem Wäscher 12 zugeführt. Der Hauptteil wird wieder dem Beizprozeß zugeführt. Die dargestellte Absorptionskolonne 14 ist hier sowohl für die Absorption, als auch für die anschließende Wäsche des Gases ausgebildet. Das gereinigte Gas gelangt anschließend über Leitung 18 und einen Abgasventilator 19 in den Abgasseparator 20, über einen Abgaswärmetauscher 21 zu einer katalytischen Nachbehandlung 22. Das gereinigte Abgas verläßt die Anlage über den Abgaskamin 23.

Das vom Venturiwäscher 12 kommende Abgas des Sprühröstreaktors 2 wird in den äußeren, der Absorption dienenden Bereich 24 im unteren Teil der Kolonne 14 geleitet. Es strömt durch die Füllkörper nach oben und wird im Kopfbereich 25 der Kolonne 14 umgelenkt und durch das zentrale Strahlwäscherrohr 26 nach unten in den Bereich des am unteren Ende der Kolonne 14 angeordneten Spülwasserbehälters 27 geleitet. Das zentrale Strahlwäscherrohr und der Spülwasserbehälter können auch in nicht kompakter Bauweise als Einzelbauteile angeordnet sein. Das Spülwasser aus dem Spülwasserbehälter 27 wird durch die Pumpe 28 und Leitung 29 in den Kopfbereich 25 der Kolonne 14 geführt. Weiters wird über eine Leitung 30 Frischwasser vor dem Ventilator 19 in die Abgasleitung 18 eingesprüht, wodurch eine letzte Waschung des Gases erfolgt. Das im Abgasseparator 20 abgetrennte Abwasser wird über eine Leitung 31 in den Spülwasserbehälter 27 der Kolonne 14 zurückgeführt und dient dort als Absorptionswasser für die Kolonne 14. Durch diese Verfahrensführung kann die Anlage abwasserfrei gestaltet werden. Ergänzend wird über Leitung 32 zusätzliches Frischwasser zugeführt. Es ist auch möglich hier Waschwasser aus der Beize zu verwenden. Durch die Menge der Absorptionsflüssigkeit kann die Konzentration der im Regenerat rückgewonnenen Säure eingestellt werden.

Die Erfindung ist nicht durch die beschriebenen Beispiele beschränkt. Als Variante kann z.B. zur Abgasreinigung auch ein NaOH oder Ca(OH)₂-Wäscher eingesetzt werden. Die dabei anfallenden Wachwässer können dann jedoch nicht als Absorptionsflüssigkeit für die Kolonne verwendet werden. Als weitere Möglichkeit kann zwischen Reaktor und Kolonne eine Wärmerückgewinnung zur Aufkonzentrierung der Abbeize eingesetzt werden. Auch kann z.B. nach dem Reaktor zur besseren Staubabscheidung ein Zyklon eingesetzt werden.

## Patentansprüche

1. Verfahren zur Rückgewinnung von Säuren aus metallhaltigen Lösungen von Säuren, die HNO₃, sowie vorzugsweise auch HF, Fe, Cr, Ni- Verbindungen oder Mischungen aus diesen Verbindungen enthalten, durch Verdampfung und pyrolytische Aufspaltung in Säuren und Metalloxide, **dadurch gekennzeichnet, daß** ein beheizter, durch Einbauten in zwei Zonen unterteilter Reaktor vorgesehen ist, wobei in der oberen, ersten Zone eine Verdampfung bei einer Temperatur von 110°C - 350 °C und in einer weiteren, direkt anschließenden Zone eine Zersetzung bei einer Temperatur von 450 °C - 900 °C stattfindet.

2. Verfahren nach Anspruch 1, **dadurch gekennzeichnet, daß** die Temperatur in der Verdampfungszone 150 °C - 200 °C, beträgt.

3. Verfahren nach Anspruch 1 oder 2, **dadurch gekennzeichnet, daß** die Temperatur in der Zersetzungszone 550 °C - 700°C, beträgt.

4. Verfahren nach einem der Ansprüche 1 bis 3, **dadurch gekennzeichnet, daß** nach der Zersetzungszone eine Absorption folgt.

5. Verfahren nach Anspruch 4, **dadurch gekennzeichnet, daß** die Temperatur der Absorption 70 °C - 90 °C, vorzugsweise 78 °C - 85 °C, beträgt.

6. Verfahren nach Anspruch 4 oder 5, **dadurch gekennzeichnet, daß** die Absorption adiabatisch erfolgt.

7. Verfahren nach einem der Ansprüche 1 bis 6, **dadurch gekennzeichnet, daß** das Abwasser aus der Gaswäsche der Absorptionskolonne zugeführt wird.

8. Verfahren nach einem der Ansprüche 1 bis 7, **dadurch gekennzeichnet, daß** Waschwasser aus der Beize der Absorptionskolonne zugeführt wird.

## Claims

1. Process for recovering acids from metalliferous solutions of acids containing HNO₃ and preferably also HF, Fe, Cr, Ni compounds or mixtures of these compounds, by evaporation and pyrolytic splitting into acids and metal oxides, **characterised by** a heated reactor, which is split into two zones by built-in parts, being provided, with evaporation taking place at a temperature of 110 °C - 350 °C in the upper, first zone and decomposition at high temperature of 450°C - 900°C in a further zone immediately adjoining the first.

2. Process according to Claim 1, **characterised by** the temperature in the evaporation zone being between 150 °C and 200°C.

3. Process according to Claim 1 or 2, **characterised by** the temperature in the decomposition zone being between 550 °C and 700°C.

4. Process according to one of Claims 1 to 3, **characterised by** the decomposition zone being followed by absorption.

5. Process according to Claim 4, **characterised by** absorption taking place at a temperature of 70 °C - 90°C, preferably 78 °C - 85°C.

6. Process according to Claim 4 or 5, **characterised by** absorption taking place in an adiabatic process.

7. Process according to one of Claims 1 to 6, **characterised by** the waste water from the gas scrubber being fed to the absorption column.

8. Process according to one of Claims 1 to 7, **characterised by** wash water from the pickling bath being fed to the absorption column.

## Revendications

1. Procédé pour récupération d'acides à partir de solutions métallifères contenant de l'acide HNO₃ et de préférence aussi des combinaisons de HF, Fe, Cr, Ni ou bien des mélanges de ces combinaisons, par l'évaporation et la séparation pyrolytique en acides et oxydes métalliques, **caractérisé en ce qu'**un réacteur chauffé divisé en deux zones moyennant des pièces intégrées est prévu, l'évaporation ayant lieu à une température allant de 110°C à 350°C dans la première zone, supérieure, et la décomposition à une température allant de 450°C à 900°C dans une autre zone immédiatement adjacente à la première.

2. Procédé selon la revendication 1, **caractérisé en ce que** la température dans la zone d'évaporation est entre 150°C et 200°C.

3. Procédé selon la revendication 1 ou 2, **caractérisé en ce que** la température dans la zone de décomposition est entre 550°C et 700°C.

4. Procédé selon l'une des revendications 1 à 3, **caractérisé en ce que** la zone de décomposition est suivie d'une absorption.

5. Procédé selon la revendication 4, **caractérisé en ce que** l'absorption a lieu à une température allant de 70°C à 90°C, de préférence de 78°C à 85°C.

6. Procédé selon la revendication 4 ou 5, **caractérisé en ce que** l'absorption a lieu dans un procédé adiabatique.

7. Procédé selon l'une des revendications 1 à 6, **caractérisé en ce que** l'eau usée provenant du lavage de gaz est transférée à la colonne d'absorption.

8. Procédé selon l'une des revendications 1 à 7, **caractérisé en ce que** l'eau de lavage du bain de décapage est transférée à la colonne d'absorption.
